# FASCICULE DE BREVET EUROPEEN

(11) **EP 0 921 309 B1**
(45) Date de publication et mention de la délivrance du brevet: **19.03.2003**
(21) Numéro de dépôt: 97402898.7
(22) Date de dépôt: 02.12.1997
(51) Int. Cl.: F03C 1/04, F03C 1/24

(54) **Moteur hydraulique à sélecteur de fonction**
Hydraulikmotor mit Schaltventil
Hydraulic motor with switch valve

(43) Date de publication de la demande: 09.06.1999
(73) Titulaire: POCLAIN HYDRAULICS INDUSTRIE, 60411 Verberie (FR)
(72) Inventeur: Allart, Bernard, 60800-Crepy-en-Valois (FR); Cousin, Jean-Claude, 60700 - Pontpoint (FR); Blondeau, Eric, 60800 - Crepy-en-Valois (FR)
(74) Mandataire: Intès, Didier Gérard André

(56) Documents cités:
- EP-A- 0 601 916
- US-A- 4 356 761

## Description

La présente invention concerne un moteur à fluide sous pression comprenant :
- un carter qui comporte deux conduits principaux de puissance, respectivement d'alimentation de fluide et d'échappement de fluide ;
- un bloc-cylindres qui comporte une pluralité de cylindres équipés, chacun, d'un piston, ces cylindres étant disposés radialement par rapport à un axe et étant susceptibles d'être alimentés en fluide sous pression ;
- un organe de réaction apte à coopérer avec les pistons, cet organe de réaction et le bloc-cylindres étant susceptibles de tourner l'un par rapport à l'autre autour de l'axe ;
- un distributeur interne de fluide, solidaire de l'organe de réaction vis-à-vis de la rotation autour de l'axe de rotation et présentant des conduits de distribution susceptibles de communiquer avec les cylindres, ces conduits de distribution étant répartis en trois groupes de conduits de distribution ; et
- un sélecteur comprenant un alésage et un tiroir, l'alésage ayant une face sensiblement cylindrique qui présente au moins trois gorges, les deux conduits principaux et trois conduits de connexion qui sont respectivement reliés à chacun des trois groupes de conduits de distribution étant raccordés à cet alésage, le tiroir étant monté dans l'alésage et présentant au moins une première gorge de sélection ménagée sur sa périphérie externe, ce tiroir étant susceptible d'être déplacé entre deux positions dans lesquelles ladite gorge de sélection isole et/ou fait communiquer certaines gorges dudit alésage.

On connaît des moteurs de ce type pour lesquels le sélecteur sert à la sélection de la cylindrée. C'est par exemple le cas du moteur lent que présente le brevet français n° 2 699 229 (EP 0 601 916 A1) qui comporte deux cylindrées actives de fonctionnement. Dans ce cas, dans une des positions du tiroir du sélecteur, les deux cylindrées sont activées tandis que dans l'autre position seule l'une d'entre elles est activée.

La présente invention vise à améliorer un tel moteur en faisant en sorte qu'à partir d'un seul bloc de base, constitué par les composants essentiels du moteur, celui-ci puisse être doté de fonctions différentes en changeant seulement le tiroir du sélecteur et, éventuellement, en pratiquant un alésage supplémentaire. En d'autres termes, l'invention vise, à partir d'une même structure de base de moteur, à permettre une modularité très grande et l'obtention de fonctions diverses.

Ce but est atteint grâce au fait que le moteur comporte un conduit supplémentaire de puissance, d'alimentation ou d'échappement de fluide,
au fait que l'alésage du sélecteur présente quatre gorges annulaires, réalisées dans ladite face sensiblement cylindrique et espacées les unes des autres, ces gorges comprenant deux gorges dites "de communication" et deux gorges dites "de dérivation", un premier des deux conduits principaux et le premier conduit de connexion étant reliés en permanence à la première gorge de communication, le deuxième des deux conduits principaux et le deuxième conduit de connexion étant reliés en permanence à la deuxième gorge de communication, le conduit supplémentaire étant relié en permanence à la première gorge de dérivation, et le troisième conduit de connexion étant relié en permanence à la deuxième gorge de dérivation,
et au fait que la première gorge de sélection du tiroir est susceptible de mettre en communication les deux gorges de dérivation de l'alésage.

Par conduit (principal ou supplémentaire) de puissance, on désigne un conduit qui véhicule le fluide servant directement à assurer la rotation relative du bloc-cylindres et de l'organe de réaction, ce conduit de puissance véhicule donc le fluide qui alimente les cylindres ou qui s'en échappe. Selon le sens de rotation du moteur, un conduit de puissance peut servir soit à l'alimentation en fluide, soit à l'échappement. Outre ces conduits de puissance, le carter comporte normalement au moins un autre conduit, dit "conduit de retour de fuites" qui débouche dans la cavité interne du carter, par exemple au voisinage de l'organe de réaction, et qui sert à évacuer les faibles quantités de fluide pouvant se trouver dans cette cavité du fait des fuites qui se produisent notamment entre les pistons et les cylindres ou entre le distributeur et les conduits de cylindres.

On comprend que la structure de base du moteur comprend les éléments essentiels constitués par le carter, le bloc-cylindres, l'organe de réaction, le distributeur et l'alésage du sélecteur, alésage qui est pourvu de quatre gorges. Les gorges de communication ont la fonction classique qui consiste à assurer l'alimentation ou l'échappement du fluide jusqu'au distributeur dont les conduits sont eux-mêmes raccordés aux cylindres. Comme on le verra mieux dans la suite, les gorges de dérivation permettent, en choisissant diverses formes pour le tiroir du sélecteur, d'assurer des fonctions diverses. Ce tiroir comporte au moins la première gorge de sélection qui, dans l'une des positions du tiroir, met en communication les deux gorges de dérivation.

Dans cette position, ces deux gorges peuvent remplir la fonction d'une troisième gorge analogue aux gorges de communication (à ceci près qu'elles sont raccordées au conduit supplémentaire), et par exemple servir pour la sélection des cylindrées, lorsque le moteur comprend deux cylindrées de fonctionnement.

Pour ce faire, le tiroir peut comporter une unique gorge de sélection apte, dans la première position, à faire communiquer les deux gorges de dérivation avec l'une des gorges de communication et, dans la deuxième position, à faire communiquer les deux gorges de dérivation avec l'autre gorge de communication.

Pour doter le moteur d'une fonction différente, il suffit de changer le tiroir du sélecteur en choisissant par exemple un tiroir ayant deux gorges de sélection. Dans certains cas, on peut en outre pratiquer un alésage supplémentaire mettant les deux gorges de dérivation en communication permanente.

Selon une disposition avantageuse, les gorges de l'alésage du sélecteur étant numérotées de 1 à 4 lorsque l'on les considère les unes après les autres d'une première à une deuxième extrémité de la face sensiblement cylindrique de cet alésage, la première et la quatrième gorge sont des gorges de communication, tandis que la deuxième et la troisième gorge sont des gorges de dérivation.

Comme on le verra dans la suite, cette disposition permet, pour une disposition compacte et une faible course du tiroir du sélecteur, de sélectionner les mises en communication ou les isolements des gorges de communication et/ou des gorges de dérivation.

Selon une variante, les gorges de dérivation sont des gorges borgnes, seul le conduit supplémentaire étant relié en permanence à la première gorge de dérivation, tandis que seul le troisième conduit de connexion est relié en permanence à la deuxième gorge de dérivation.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la Figure 1 est une vue schématique en coupe axiale d'un moteur conforme à l'invention,
- les Figures 2 et 3 sont deux schémas d'un même circuit de commande intégrant deux moteurs analogues à celui de la Figure 1, correspondant respectivement à chacune des deux positions des sélecteurs de ces deux moteurs,
- la Figure 4 est une vue partielle schématique en coupe axiale du sélecteur d'un moteur selon un deuxième mode de réalisation,
- la Figure 5 est le schéma d'un circuit de commande intégrant deux moteurs dotés d'un sélecteur conforme à la Figure 4, pour une position de ce sélecteur,
- la Figure 6 est une vue analogue à la Figure 4 pour un autre mode de réalisation,
- la Figure 7 est le schéma d'un circuit de commande intégrant deux moteurs équipés d'un sélecteur conforme à la Figure 6, pour une position de ce sélecteur,
- la Figure 8 est une vue analogue aux Figures 4 et 6 pour un autre mode de réalisation,
- la Figure 9 est une vue analogue à la Figure 8 pour encore un autre mode de réalisation,
- la Figure 10 est un schéma partiel de la commande d'un tel moteur, et
- les Figures 11 et 12 sont des vues partielles schématiques montrant en coupe axiale le sélecteur d'un moteur selon encore un autre mode de réalisation, avec le circuit d'alimentation de ce moteur.

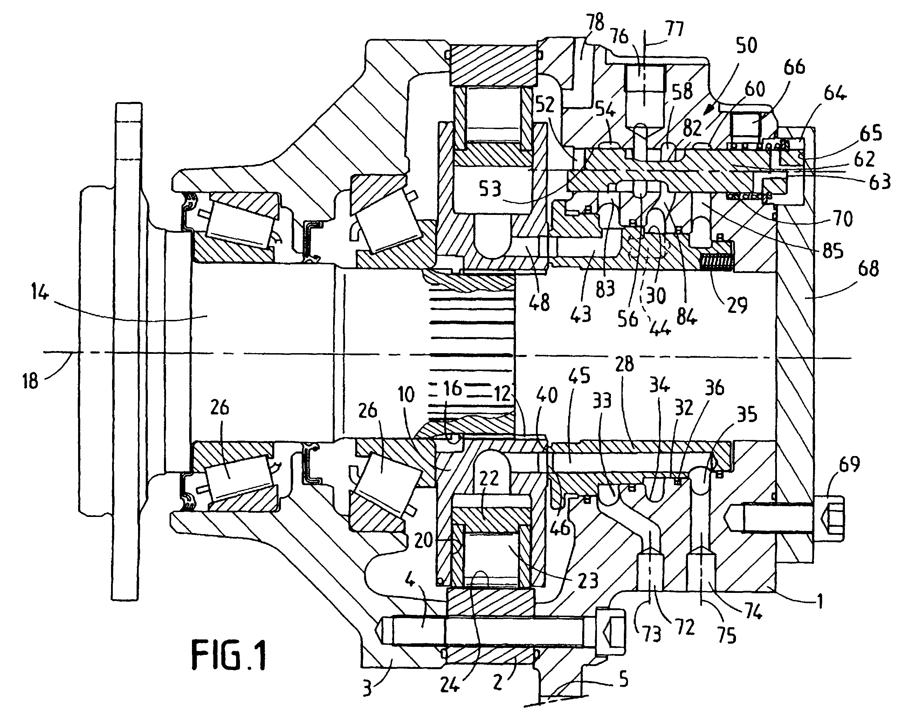

Le moteur hydraulique représenté sur la Figure 1 est par exemple un moteur hydraulique lent à fort couple, comprenant
- un carter en trois parties 1, 2, 3 assemblées par des vis 4,
- un bloc-cylindres 10 qui présente un alésage central muni de cannelures 12, cet alésage étant traversé par un arbre 14 dont l'extrémité est munie de cannelures 16 coopérant avec les cannelures 12, de telle sorte que l'arbre 14 et le bloc-cylindres 10 sont solidaires en rotation autour de l'axe de rotation 18,
- des cylindres 20, ménagés dans le bloc-cylindres 10 et disposés radialement par rapport à l'axe 18,
- des pistons 22 qui sont chacun montés coulissants dans un cylindre 20,
- un organe de réaction constitué par exemple par une came ondulée 24 ménagée sur la périphérie interne de la partie intermédiaire 2 du carter, cette came étant susceptible de coopérer avec des rouleaux 23 équipant les extrémités des pistons 22,
- des paliers 26 supportant l'arbre 14 en rotation par rapport à la partie 3 du carter, l'ensemble constitué par l'arbre 14 et le bloc-cylindres 10 étant ainsi susceptible de tourner autour de l'axe 18 par rapport au carter du moteur.

La partie 1 du carter est munie d'une patte 5 permettant par exemple de le fixer au châssis d'un véhicule. Le moteur représenté à titre d'exemple est donc un moteur dit "à arbre tournant", dont le carter est immobile en rotation.

Le moteur comporte encore un distributeur interne de fluide 28 qui est solidaire de la came 24 vis-à-vis de la rotation autour de l'axe 18. Ce distributeur comporte une surface sensiblement axiale 30 présentant une succession d'épaulements. Le distributeur 28 est disposé dans un logement pratiqué axialement dans la partie 1 du carter. La surface axiale 30 du distributeur se trouve en regard d'une surface axiale 32 de ce logement, dans laquelle sont ménagées trois gorges, respectivement 33, 34 et 35. Chacune de ces gorges débouche du côté radial interne sur une section différente de la surface axiale 30 du distributeur 28, délimitant trois enceintes étanchées par des joints 36.

Le distributeur présente une face de distribution 40 qui est plane et perpendiculaire à l'axe 18. Le distributeur présente des conduits de distribution qui débouchent, d'une part, dans cette face 40 et, d'autre part, dans l'une des gorges 33, 34 et 35. On distingue trois groupes de conduits de distribution 43, 44 et 45, selon qu'ils débouchent dans l'une de ces trois gorges. Ainsi, deux conduits 43 et 45 appartenant à deux groupes différents et débouchant tous deux dans la face 40 et respectivement dans les gorges 33 et 35 sont visibles dans le plan de coupe, tandis que le conduit 44 est seulement suggéré par des traits interrompus. Les ouvertures des conduits de distribution sur la face 40 sont toutes centrées sur un même cercle et régulièrement espacées angulairement.

De son côté, le bloc-cylindres comporte une face de communication 46, qui est plane et perpendiculaire à l'axe 18. Des conduits de cylindre 48 raccordent la chambre de travail de chaque cylindre à la face de communication 46, dans laquelle ils débouchent sur le même cercle, centré sur l'axe 18, que les conduits de distribution 43, 44, 45. La face de distribution 40 du distributeur 28 est maintenue en appui (par exemple par des ressorts 29 et/ou par un équilibrage hydraulique) sur la face de communication 46. Les conduits de distribution du distributeur sont ainsi susceptibles de communiquer séquentiellement avec les cylindres 20, au cours de la rotation du bloc-cylindres par rapport au carter.

Le moteur comporte encore un sélecteur 50 comportant un alésage 52 qui, dans l'exemple représenté, est pratiqué axialement dans la partie 1 du carter. Cet alésage présente quatre gorges annulaires 54, 56, 58 et 60 qui, dans l'exemple représenté, sont donc disposées transversalement à l'axe 18. Les quatre gorges de l'alésage sont réalisées dans la surface cylindrique ou sensiblement cylindrique 53 de ce dernier.

Un tiroir 62 est monté dans l'alésage 52, dans lequel il peut coulisser entre deux positions. Pour commander le déplacement du tiroir, l'alésage comporte une chambre de pilotage 64 alimentée en fluide sous pression par l'intermédiaire d'un conduit externe 66. Cette chambre communique avec une extrémité 63 du tiroir 62 qui forme piston de pilotage. Lorsque la chambre 64 est en communication avec le fluide sous pression, ce fluide tend à déplacer le tiroir 62 de sa première vers sa deuxième position, dans laquelle son extrémité 63 est éloignée de la paroi extrême 65 correspondante de la chambre, position représentée sur la moitié inférieure du sélecteur 50 de la Figure 1. La paroi extrême 65 de la chambre est réalisée dans une plaque de fermeture 68 disposée transversalement sur l'extrémité de la partie 1 du carter et fixée à l'aide de vis 69. Un ressort 70 est disposé dans la chambre de pilotage 64 et a un effet antagoniste de celui du fluide contenu dans cette chambre. Par conséquent, ce ressort tend à rappeler le tiroir vers sa première position, dans laquelle son extrémité 63 est voisine de la paroi extrême 65 de la chambre, position représentée sur la moitié supérieure du sélecteur 50 de la Figure 1.

On voit sur la Figure 1 que le carter du moteur, plus précisément sa partie 1, comporte trois conduits de puissance. Il s'agit tout d'abord de deux conduits dits "principaux", respectivement 72 et 74, qui débouchent respectivement dans les gorges 33 et 35. Ces conduits sont respectivement raccordés à des conduits externes 73 et 75. Selon le sens de rotation du moteur, les conduits principaux 72 et 74 peuvent être respectivement un conduit d'échappement de fluide et un conduit d'alimentation de fluide, ou réciproquement. II s'agit ensuite d'un conduit de puissance supplémentaire 76 raccordé à un conduit externe 77. La situation du conduit 76 sera précisée-dans la suite.

Outre les trois conduits de puissance 72, 74 et 76, le carter comporte un conduit de retour de fuite 78.

La partie 1 du carter comporte encore trois conduits de connexion respectivement désignés par les références 83, 84 et 85. Le conduit 83 est relié au groupe de conduits de distribution 43 raccordés à la gorge 33, tandis que les conduits de connexion 84 et 85 sont respectivement reliés à chacun des deux groupes de conduits de distribution 44 et 45, respectivement raccordés aux gorges 34 et 35.

Les raccordements entre les différents conduits et les quatre gorges annulaires de la face cylindrique de l'alésage 52 sont organisés de la façon suivante :
- le premier conduit principal 72 et le premier conduit de connexion 83 sont tous deux reliés en permanence à la gorge 54, dénommée "première gorge de communication" (on peut par exemple imaginer que le conduit de connexion 83 débouche du côté radial interne dans la gorge 54, tandis que le premier conduit principal 72 débouche dans cette gorge mais du côté radial externe ; on peut également imaginer que le conduit 72 soit directement raccordé au conduit 83 lui-même débouchant dans la gorge 54; on peut encore imaginer, comme dans l'exemple représenté, que le conduit 72 débouche directement dans la gorge 33 et que, le conduit 83 raccordant cette gorge 33 à la gorge 54, les deux conduits 72 et 83 soient finalement tous deux raccordés à la gorge 54);
- le conduit supplémentaire 76 est relié en permanence à la gorge 56, dénommée "première gorge de dérivation" (par exemple, le conduit 76 débouche directement dans la gorge 56, du côté radial externe) ;
- le conduit de connexion 84, ci-après dénommé "troisième conduit de connexion", est relié en permanence à la gorge 58, ci-après dénommée "deuxième gorge de dérivation" (par exemple, le conduit 84 débouche directement dans la gorge 58, du côté radial interne) ;
- enfin, le deuxième conduit principal 74 et le conduit de connexion 85, ci-après dénommé "deuxième conduit de connexion", sont reliés en permanence à la gorge 60, ci-après dénommée "deuxième gorge de communication " (le raccordement entre ces conduits et la gorge 60 peut être réalisé de la manière précédemment évoquée en relation avec la gorge 54 et les conduits 72 et 83).

Les gorges 54 et 60 sont respectivement dénommées première et deuxième gorge de communication dans la mesure où elles servent respectivement à mettre en communication les deux groupes de conduits de distribution 43, 45 avec les deux conduits principaux de puissance 72, 74, par l'intermédiaire des deux premiers conduits de connexion 83, 85. En revanche, les gorges 56 et 58 sont dénommées première et deuxième gorge de dérivation dans la mesure où elles sont principalement respectivement raccordées au conduit supplémentaire 76 et au troisième conduit de connexion 84 et où, selon la position du tiroir 62, elles peuvent servir à dériver le fluide soit vers le troisième groupe de conduits de distribution 44 débouchant dans la gorge 34, soit vers l'un 43 ou l'autre 45 des autres groupes débouchant dans les gorges 33 ou 35. Ainsi, le moteur est constitué de deux demi-moteurs de cylindrées distinctes, le groupe des conduits de distribution 44 appartenant à l'un des deux demi-moteurs, le groupe des conduits de distribution 45 appartenant à l'autre des deux demi-moteurs, alors que le groupe des conduits de distribution 43 possède des conduits 43 appartenant à l'un ou à l'autre des deux demi-moteurs, le nombre des conduits 43 étant égal à la somme des nombres de conduits 44 et de conduits 45.

Le tiroir 62 de la Figure 1 présente une unique gorge 82 réalisée sous la forme d'un renfoncement annulaire sur la périphérie externe de ce tiroir. Dans toute la suite, la ou les gorges du tiroir du sélecteur seront dénommées "gorges de sélection".

On a indiqué précédemment que le moteur représenté à titre d'exemple sur la Figure 1 est un moteur dit "à arbre tournant". On remarque que l'alésage du sélecteur est réalisé dans une portion de la partie 1 du carter de ce moteur qui est relativement éloignée de l'axe 18. Par ailleurs, cet alésage est disposé axialement, parallèlement à l'axe 18. C'est généralement une disposition de ce type que l'on choisit pour un moteur à arbre tournant, mais d'autres dispositions sont possibles.

Toutefois, l'invention peut également s'appliquer à des moteurs d'un type différent, dits "à came tournante" dans lesquels ce sont le distributeur et la came qui tournent tandis que le bloc-cylindres et l'arbre sont fixes en rotation. Les conduits de distribution débouchent alors dans des gorges ménagées entre le distributeur et une pièce d'alimentation qui est fixe en rotation, cette pièce d'alimentation présentant elle-même des conduits d'alimentation et d'échappement qui débouchent dans ces gorges. Dans ce cas, l'alésage du sélecteur du moteur conforme à l'invention peut se trouver dans la pièce d'alimentation ou dans la région de l'interface entre cette pièce et le distributeur. Le fonctionnement du sélecteur est le même que précédemment indiqué en relation avec la Figure 1.

En référence aux Figures 1 à 3, on décrit maintenant le fonctionnement du sélecteur 50 équipant le moteur selon un premier mode de réalisation de l'invention et une application de deux moteurs de ce type dans un circuit.

Le tiroir 62 du sélecteur 50 de la Figure 1 présente une unique gorge de sélection 82. Cette gorge est réalisée de telle sorte que, lorsque le tiroir occupe sa première position représentée dans la partie supérieure de l'alésage, les deux gorges de dérivation 56 et 58 communiquent entre elles et sont isolées des gorges de communication 54 et 60, tandis que lorsque le tiroir 62 occupe sa deuxième position représentée sur la partie inférieure de l'alésage, les deux gorges de dérivation 56 et 58 communiquent entre elles et communiquent également avec l'une des gorges de communication (en l'espèce la première gorge 54) tout en isolant de ces trois gorges l'autre gorge de communication (en l'espèce la deuxième gorge de communication 60).

Lorsque l'on utilise la disposition avantageuse dans laquelle les deux gorges de dérivation 56 et 58 sont situées entre les deux gorges de communication 54 et 60, le mode de réalisation décrit ci-dessus est obtenu tout simplement en dotant la gorge 82 d'une longueur supérieure à l'espacement entre les deux gorges 56 et 58 et tout au plus sensiblement égale à l'espacement entre la gorge 54 et celle des gorges de dérivation (la gorge 58) qui est la plus éloignée de cette dernière. Dans la première position du tiroir, la gorge 82 est sensiblement centrée sur les deux gorges 56 et 58 et les met en communication tout en les isolant des deux gorges 54 et 60, tandis que dans la deuxième position la gorge 82 est sensiblement centrée sur la gorge 56 et fait donc communiquer les trois gorges 54, 56 et 58 tout en isolant la gorge 60.

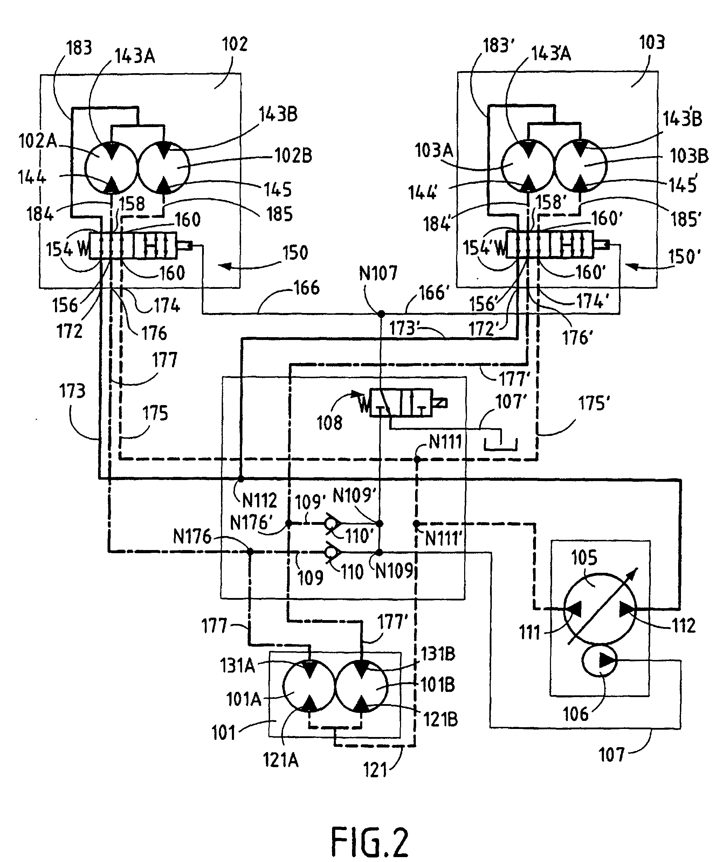

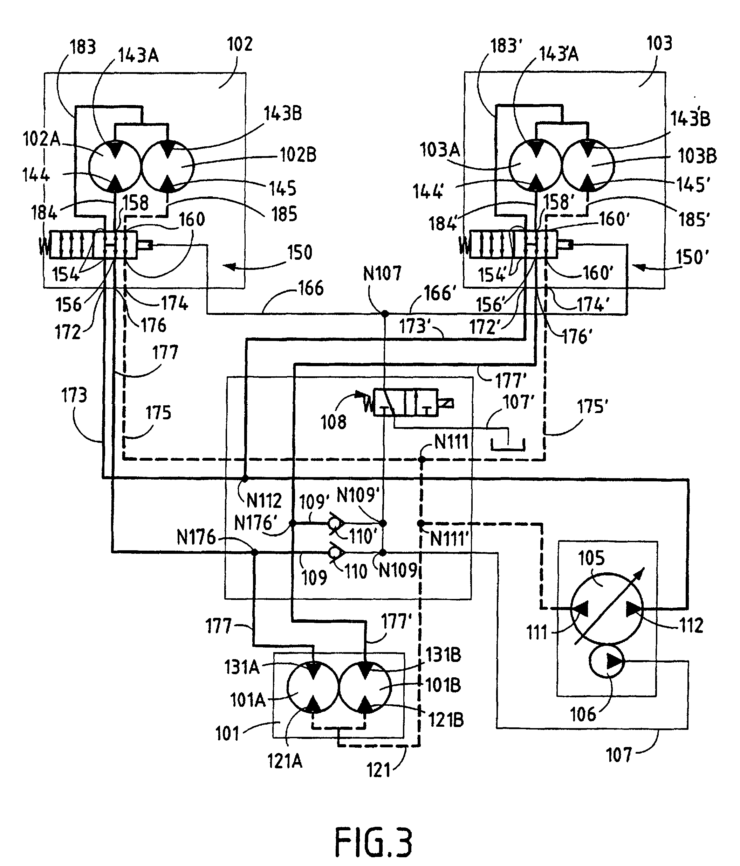

Ce mode de réalisation est avantageusement mis à profit pour réaliser un circuit de commande conforme aux Figures 2 et 3. Ce circuit comporte trois moteurs hydrauliques, respectivement 101, 102 et 103, et peut équiper un engin à trois roues ou groupes de roues, plus généralement à trois groupes d'organes de déplacement. Ces moteurs comportent chacun deux cylindrées distinctes de fonctionnement et sont donc représentés chacun par deux demi-moteurs, respectivement 101A et 101B, 102A et 102B, et 103A et 103B. Les deux moteurs hydrauliques 102 et 103 sont conformes au moteur de la Figure 1 et sont tous deux équipés d'un sélecteur, respectivement désigné par les références 150 et 150'.

L'alimentation en fluide sous pression de ces moteurs est réalisée par une pompe à débit variable 105, munie de raccords principaux 111 et 112 qui, selon le sens de fonctionnement de la pompe, sont des conduits d'alimentation ou d'échappement.

Les moteurs 102 et 103 comportent chacun deux conduits principaux de puissance, d'alimentation ou d'échappement, 172 et 174 pour le moteur 102, 172' et 174' pour le moteur 103. Ils comportent également chacun un conduit supplémentaire de puissance, d'alimentation ou d'échappement, 176 pour le moteur 102 et 176' pour le moteur 103.

Les premiers conduits principaux 172 et 172' des moteurs 102 et 103 sont reliés au raccord 112 de la pompe par des conduits externes 173 et 173' et par un noeud N112. Les deuxièmes conduits principaux 174 et 174' sont reliés au raccord 111 de la pompe par des conduits externes 175 et 175' et par un noeud N111. Le raccord 111 est également raccordé à un conduit principal 121 du moteur 101 par un noeud N111'. Le conduit principal 121 est raccordé aux deux demi-moteurs 101A et 1018, respectivement par deux raccords principaux de conduits de distribution 121A et 121B.

Comme pour le moteur de la Figure 1, les premiers conduits principaux 172 et 172' sont respectivement raccordés aux premières gorges de communication 154 et 154' des sélecteurs 150 et 150'. Les deuxièmes conduits principaux 174 et 174' sont respectivement raccordés aux deuxièmes gorges de communication 160 et 160' des sélecteurs 150 et 150'.
Les conduits supplémentaires 176 et 176' sont, quant à eux, respectivement raccordés aux premières gorges de dérivation 156 et 156' des sélecteurs.

Les moteurs 102 et 103 comportent également des conduits de connexion qui sont raccordés aux conduits de distribution. Ainsi, les premiers conduits de connexion 183 et 183' sont respectivement raccordés aux gorges 154 et 154', les deuxièmes conduits de connexion 185 et 185' sont respectivement raccordés aux deuxièmes gorges de communication 160 et 160', et les troisièmes conduits de connexion 184 et 184' sont respectivement raccordés aux deuxièmes gorges de dérivation 158 et 158'.

Le premier conduit de connexion 183 est relié aux conduits de distribution 143A et 143B des deux demi-moteurs 102A et 102B du moteur 102. De même, le premier conduit de connexion 183' est relié aux conduits de distribution 143'A et 143'B des demi-moteurs 103A et 103B. En revanche, les deuxièmes conduits de connexion 185 et 185' sont seulement reliés aux demi-moteurs 102B et 103B, respectivement par les conduits de distribution 145 et 145'. Enfin, les troisièmes conduits de connexion 184 et 184' sont respectivement reliés seulement aux demi-moteurs 102A et 103A, respectivement par les conduits de distribution 144 et 144'.

On remarque encore que les conduits supplémentaires 176 et 176' sont respectivement reliés aux demi-moteurs 101A et 101B du moteur 101, via les conduits externes 177 et 177', respectivement par les raccords de conduits de distribution 131A et 131B.

Pour mieux comprendre le fonctionnement du circuit, on a représenté en trait gras les conduits reliés au raccord 112 de la pompe 105, en trait interrompu régulier les conduits reliés au raccord 111 de la pompe et en trait mixte interrompu les conduits reliés aux conduits supplémentaires des moteurs 102 et 103.

Par ailleurs, les conduits du circuit de commande des sélecteurs 150 et 150' sont représentés en trait fin. Ils comportent un conduit de gavage 107 raccordé à la sortie d'une pompe de gavage 106. Une vanne de commande 108 (par exemple une électrovanne) est interposée sur le conduit 107. Des conduits 166 et 166' de pilotage des tiroirs des sélecteurs 150 et 150' sont raccordés au conduit 107 par un noeud N107. Lorsque la vanne 108 occupe sa première position représentée à la Figure 1, elle empêche le passage du fluide circulant dans le conduit 107 jusqu'au noeud N107. Par conséquent, les tiroirs des sélecteurs 150 et 150' occupent leurs premières positions. Toujours dans cette position de la vanne 108, le tronçon du conduit 107 situé entre cette vanne et le noeud N107 est raccordé à un conduit de vidange 107'. En revanche, dans la deuxième position de la vanne 108 qui est représentée sur la Figure 3, le fluide passe dans le conduit 107 jusqu'au noeud N107 et alimente les conduits de pilotage 166 et 166', sollicitant ainsi les tiroirs des sélecteurs 150 et 150' dans leurs deuxièmes positions respectives. Grâce à ce circuit de commande, les sélecteurs 150 et 150' sont commandés simultanément, soit dans leurs premières positions, soit dans leurs deuxièmes positions.

Des tronçons de conduits 109 et 109' sur lesquels sont situés des clapets anti-retour 110 et 110' sont raccordés au conduit 107 par des noeuds N109 et N109'. Ces conduits 109 et 109' sont respectivement raccordés aux conduits 176 et 176', respectivement par des noeuds N176 et N176'. Les clapets anti-retour permettent le passage du fluide dans le sens allant du conduit 107 vers les conduits 176 et 176'. Ils peuvent être intégrés dans les moteurs.

Sur la Figure 2, les tiroirs des sélecteurs 150 et 150' sont tous deux dans leurs premières positions correspondant à la position de la partie supérieure du tiroir 62 de la Figure 1. Dans un souci de clarté, on a utilisé, pour les gorges du sélecteur 150, les mêmes références que pour celles du sélecteur 50 de la Figure 1 augmentées de 100 et, pour le sélecteur 150', les mêmes références que pour le sélecteur 150 suivies du signe "prime". Dans la première position des tiroirs des sélecteurs, les deux gorges de dérivation 156 et 158 (respectivement 156' et 158') communiquent entre elles et sont isolées des gorges de communication 154 et 160 (respectivement 154' et 160'). Par conséquent, les conduits supplémentaires 176 et 176' sont respectivement reliés aux troisièmes conduits de connexion 184 et 184', tout en étant isolés des conduits principaux et des premiers et deuxièmes conduits de connexion.

On décrit le fonctionnement du circuit de la figure 2 en supposant que le raccord 112 de la pompe est un raccord de refoulement qui sert à l'alimentation des moteurs tandis que le raccord 111 est un raccord d'aspiration qui sert à l'échappement des moteurs.

Dans ce cas, les deux cylindrées 102A et 102B du moteur 102 et les deux cylindrées 103A et 103B du moteur 103 sont alimentées en fluide sous pression par les premiers conduits principaux 172 et 172' et, par l'intermédiaire des gorges 154 et 154', par les premiers conduits de connexion 183 et 183'. En revanche, les circuits d'échappement diffèrent pour chacun des demi-moteurs. En effet, l'échappement des demi-moteurs 102A et 103A est réalisé par les troisièmes conduits de connexion 184 et 184' et par les conduits supplémentaires 176 et 176'. Ces conduits étant raccordés aux raccords 131A et 131B du moteur 101, l'échappement des deux demi-moteurs 102A et 103A assure l'alimentation des demi-moteurs 101A et 101B respectivement. De ce point de vue, on peut considérer que le moteur 101 est disposé en série par rapport aux demi-moteurs 102A et 103A.

L'échappement des demi-moteurs 102B et 103B passe par les deuxièmes conduits de connexion 185 et 185' et par les deuxièmes conduits principaux 174 et 174' qui sont raccordés au raccord d'aspiration 111 de la pompe 105. De même, l'échappement des demi-moteurs 101A et 101B se fait par le conduit 121 raccordé au raccord d'aspiration de la pompe. De ce point de vue, le moteur 101 est placé en parallèle par rapport aux demi-moteurs 102B et 103B.

Bien entendu, si le sens de rotation de la pompe est inversé, les conduits 175, 175', 174, 174' et 121 servent à l'alimentation des demi-moteurs 102B et 103B, ainsi qu'à celle des deux demi-moteurs du moteur 101. L'échappement de ces deux demi-moteurs sert respectivement à l'alimentation des demi-moteurs 102A et 103A. L'échappement des demi-moteurs 102A, 102B, 103A et 103B se fait par les conduits 172 et 172'.

Un tel circuit monté sur un véhicule permet d'éviter le patinage des organes de déplacement entraînés par les moteurs 101, 102 et 103. En effet, le moteur 101 étant disposé en série par rapport aux deux demi-moteurs 102A et 103A, on obtient la synchronisation des vitesses des organes de déplacement entraînés par les moteurs 101, 102 et 103. Les demi-moteurs 102B et 103B étant quant à eux alimentés en parallèle du moteur 101, il n'y a pas non plus de risque que, si les organes de déplacement qu'ils entraînent patinent, ce patinage se transmette à l'organe entraîné par le moteur 101.

Sur la Figure 3, les tiroirs des sélecteurs 150 et 150' sont placés dans leurs deuxièmes positions correspondant à la moitié inférieure du tiroir 62 de la Figure 1. Ainsi, les gorges de dérivation 156 et 158 (respectivement 156' et 158') sont mises en communication et communiquent avec la gorge de communication 154 (respectivement 154').

En supposant par exemple que le raccord 111 de la pompe soit un raccord de refoulement, les demi-moteurs 101A et 101B du moteur 101 sont alimentés par le conduit 121 tandis que seuls les demi-moteurs 102B du moteur 102 et 103B du moteur 103 sont alimentés par les deuxièmes conduits principaux 174 et 174', en parallèle de l'alimentation du moteur 101. Les conduits de distribution 143B et 143'B des demi-moteurs 102B et 103B sont reliés aux premiers conduits principaux 172 et 172', respectivement par les premiers conduits de connexion 183 et 183'. Les conduits de distribution 143A et 144 du demi-moteur 102A et les conduits de distribution 143'A et 144' du demi-moteur 103A sont également, du fait de la position des tiroirs des sélecteurs, reliés aux premiers conduits principaux 172 et 172', conduits auxquels sont également reliés les conduits supplémentaires 176 et 176'.

Ceci a pour conséquence que, d'une part, les demi-moteurs 102A et 103A sont inactivés et que, d'autre part, les échappements des demi-moteurs 101A et 101B sont finalement reliés au raccord d'aspiration 112 de la pompe. Ainsi les deux cylindrées du moteur 101 sont activées tandis que, pour les moteurs 102 et 103, seuls les demi-moteurs 102B et 103B sont activés et sont raccordés en parallèle sur le moteur 101. Dans cette configuration, la fonction synchronisation des vitesses des organes de déplacement (qui est intéressante en ligne droite) est supprimée de façon à obtenir un effet différentiel de vitesse dans les virages.

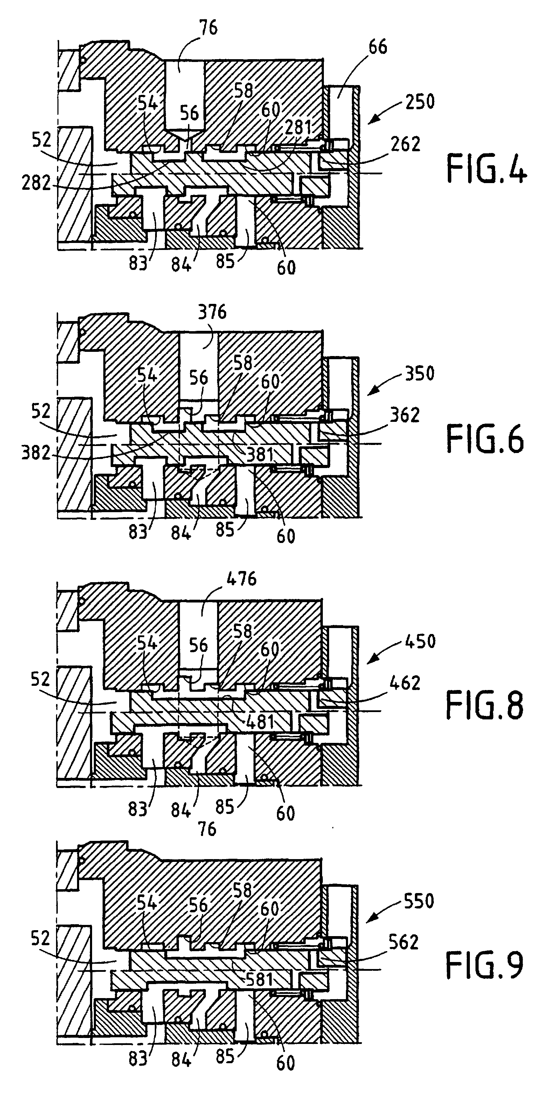

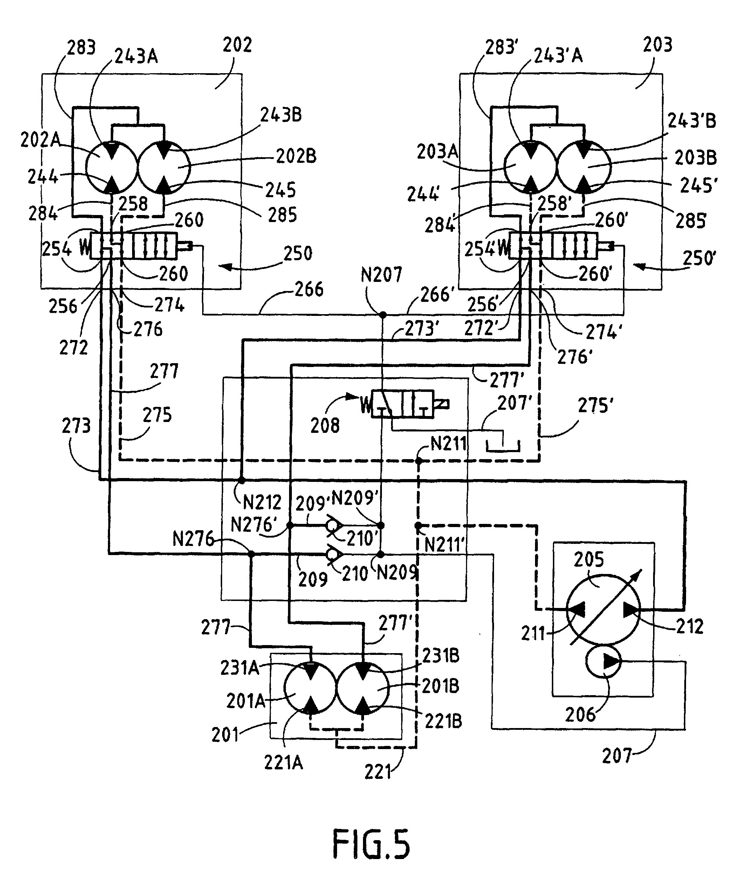

En référence à la Figure 4, on décrit maintenant un autre mode de réalisation. Cette Figure est une vue partielle d'un moteur analogue à la Figure 1, dans la région du sélecteur de ce moteur. La seule différence par rapport à la Figure 1 est la forme du tiroir, désigné par la référence 262 sur la Figure 4. Pour simplifier, on a utilisé, pour les éléments restés inchangés par rapport à la Figure 1, les mêmes références que sur cette Figure. Ainsi, les deux gorges de communication de l'alésage 52 sont désignées par les références 54 et 60, tandis que les deux gorges de dérivation de cet alésage sont désignées par les références 56 et 58. Le tiroir 262 du sélecteur 250 présente deux gorges de sélection respectivement désignées par la référence 281 pour la première gorge et 282 pour la deuxième. Dans la première position du tiroir, représentée dans la moitié supérieure de l'alésage, la première gorge de communication 54 et la première gorge de dérivation 56 sont mises en communication par la deuxième gorge de sélection 282 tandis qu'elles sont isolées de la deuxième gorge de dérivation 58 et de la deuxième gorge de communication 60. Toujours dans cette position du tiroir, la deuxième gorge de dérivation 58 et la deuxième gorge de communication 60 sont mises en communication par la première gorge de sélection 281 tandis qu'elles sont isolées des gorges 54 et 56.

En revanche, dans la deuxième position du tiroir, la première gorge de communication 54 est isolée des autres gorges de l'alésage 56, 58 et 60, tandis que les gorges de dérivation 56 et 58 sont mises en communication par la première gorge de sélection 281, et que la deuxième gorge de communication 60 est isolée des autres gorges de l'alésage.

Par exemple, dans la deuxième position du tiroir 262, la deuxième gorge de sélection 282 se trouve en regard de l'une des gorges de communication (en l'espèce la première gorge 54). En fait, la deuxième position du tiroir 262 correspond à la première position du tiroir 62 de la Figure 1 puisqu'elle permet d'isoler chacune des deux gorges de communication tandis qu'elle fait communiquer les deux gorges de dérivation.

La longueur de la première gorge de sélection 281 est tout au plus sensiblement égale à l'espacement entre la deuxième gorge de dérivation 58 et la deuxième gorge de communication 60 (espacement lui-même sensiblement égal à la distance entre les gorges 56 et 58), tandis que la longueur de la deuxième gorge de sélection 282 est tout au plus sensiblement égale à l'espacement entre la première gorge de communication 54 et la première gorge de dérivation 56.

La Figure 5 montre un circuit de commande intégrant deux moteurs, respectivement 202 et 203 conformes à la variante de la Figure 4. Mis à part les modifications apportées aux sélecteurs de ces deux moteurs, le circuit est analogue à celui des Figures 2 et 3. Par conséquent, pour simplifier, on a utilisé sur la Figure 5 les mêmes références que sur les Figures 2 et 3, augmentées de 100. Dans un souci de clarté, on a représenté par des traits interrompus réguliers tous les conduits du circuit qui sont reliés au raccord 211 de la pompe 205, par un trait gras tous les conduits qui sont reliés au raccord 212 et, par un trait fin, les conduits reliés à la pompe de gavage 206 et servant à la commande des sélecteurs 250 et 250'.

Du fait de la conformation des tiroirs des sélecteurs 250 et 250', lorsque ces derniers occupent leurs premières positions, les deuxièmes et troisièmes conduits de connexion, 285 et 284 pour le moteur 202 et 285' et 284' pour le moteur 203, sont respectivement raccordés aux deuxièmes conduits principaux 274 et 274', eux-mêmes reliés au premier raccord 211 de la pompe 205, raccord auquel est également relié le conduit 221 du moteur 201. Ainsi, les raccords 221A et 221B des deux demi-moteurs du moteur 201, les conduits de distribution 244 et 245 des deux demi-moteurs du moteur 202 et les conduits de distribution 244' et 245' des deux demi-moteurs du moteur 203 sont tous reliés au raccord 211 de la pompe.

D'autre part, les premiers conduits de connexion 283 du moteur 202 et 283' du moteur 203 sont respectivement raccordés aux conduits supplémentaires 276 et 276' qui communiquent ainsi avec les premiers conduits principaux 272 et 272', et sont finalement reliés au deuxième raccord 212 de la pompe. Ainsi, les raccords 231A et 231B des deux demi-moteurs du moteur 201, les conduits de distribution 243A et 243B des deux demi-moteurs du moteur 202 et les conduits de distribution 243'A et 243'B des demi-moteurs du moteur 203 sont tous raccordés au deuxième raccord 212 de la pompe.

Par conséquent, les trois moteurs du circuit sont alimentés en parallèle sur la pompe 205 et chacun de leurs demi-moteurs est actif. Dans cette configuration, on obtient un effet différentiel analogue à celui décrit pour la figure 3, à ceci près que les moteurs 202 et 203 fonctionnent à pleine cylindrée, le véhicule ayant donc une vitesse plus faible mais un effort de traction plus grand.

Dans la deuxième position des tiroirs des sélecteurs 250 et 250', les connexions sont les mêmes que pour le circuit de la Figure 2 précédemment décrite, les raccords 231A et 231B du moteur 101 sont en série sur, respectivement, les conduits de distribution 244 du demi-moteur 202A et 244' du demi-moteur 203A, les autres connexions étant réalisées en parallèle pour les trois moteurs 201, 202 et 203.

La Figure 6 montre un autre mode de réalisation de l'invention, dans lequel le tiroir est analogue au tiroir 262 de la Figure 4 mais dans lequel l'alésage de raccordement du conduit supplémentaire est différent. Le tiroir 362 du sélecteur 350 de la Figure 6 comporte une première et une deuxième gorges de sélection, respectivement 381 et 382. Les quatre gorges de l'alésage du sélecteur sont restées inchangées et sont donc désignées par les mêmes références que précédemment. Cette fois, le conduit supplémentaire est désigné par la référence 376. Il est en effet différent du conduit 76 précédemment indiqué dans la mesure où il comporte un alésage qui communique non seulement, comme pour le conduit 76, avec la première gorge de dérivation 56, mais également avec la deuxième gorge de dérivation 58. Ainsi, quelle que soit la position du tiroir 362, ces deux gorges 56 et 58 sont mises en communication en permanence. Dans la première position du tiroir 362 représentée sur la moitié supérieure de la Figure 6, la deuxième gorge de dérivation 58 et la deuxième gorge de communication 60 communiquent par l'intermédiaire de la première gorge de sélection 381, tandis que la première gorge de communication 54 et la première gorge de dérivation 56 communiquent par la deuxième gorge de sélection 382. Du fait de la réalisation particulière de l'alésage du conduit 376, les quatre gorges 54, 56, 58 et 60 communiquent entre elles dans la première position du tiroir 362, de sorte que tous les conduits de connexion du moteur sont mis en communication et que ce moteur est par conséquent inactivé. Bien entendu, on peut prévoir d'autres dispositifs de mise en communication permanente des gorges 56 et 58 que l'alésage 376, par exemple deux alésages respectivement liés aux gorges 56 et 58 et mis en communication par un pontage externe.

En revanche, dans la deuxième position du tiroir 362, la première gorge de sélection 381 se trouve seulement au regard des gorges 56 et 58, tandis que la deuxième gorge de sélection 382 se trouve seulement au regard de la première gorge de communication 54 et isole cette dernière des autres gorges de l'alésage. Par ailleurs, la deuxième gorge de communication 60 est également isolée des autres gorges par la paroi cylindrique du tiroir 362. Dans ce cas, les deux gorges de communication 54 et 60 sont isolées des autres gorges de l'alésage, tandis que les gorges 56 et 58 continuent de communiquer.

La Figure 7 montre un circuit de commande utilisant deux moteurs équipés du sélecteur de la Figure 6. Ce circuit est globalement analogue à ceux des Figures 2, 3 et 5 et l'on utilise sur la Figure 7 les mêmes références que sur la Figure 5, augmentées une nouvelle fois de 100.

Les composants du circuit de la Figure 7 sont globalement les mêmes que ceux du circuit de la Figure 5, à ceci près qu'une vanne d'isolement 308' est disposée de manière à, dans sa première position représentée à la Figure 7, isoler les deuxièmes conduits principaux 374 et 374' du raccord 311 de la pompe 305, qui n'est alors raccordé qu'au conduit 321, lui-même relié aux raccords 321A et 321B des demi-moteurs 301A et 301B du moteur 301. Cette vanne 308' est commandée de sa première à sa deuxième position à l'aide d'un conduit 308" raccordé au conduit 307 entre la vanne 308 et le noeud N307. Ainsi, lorsque la vanne 308 est placée dans sa deuxième position dans laquelle elle permet l'alimentation en fluide des conduits 366 et 366', le fluide circulant dans le conduit 308" vient solliciter la vanne 308' dans sa deuxième position, dans laquelle elle raccorde les conduits 374 et 374' au raccord 311 de la pompe 305. La circulation du fluide est alors conforme à ce qu'indique la Figure 2.

Dans la première position des tiroirs des sélecteurs 350 et 350', les quatre gorges de ces sélecteurs sont reliées entre elles, de sorte que tous les raccords des moteurs 302 et 303 sont mis en communication et raccordés au raccord 312 de la pompe. Ainsi, les moteurs 302 et 303 sont inactivés. Les raccords 331A et 331B des demi-moteurs 301A et 301B du moteur 301 sont également raccordés au même raccord 312 de la pompe, dont le raccord 311 est relié aux raccords 321A et 321B. Ainsi, les deux demi-moteurs du moteur 301 fonctionnement normalement. Dans ce cas, seuls les organes de déplacement ou l'organe de déplacement attelé(s) au moteur 301 est (sont) entraîné(s), tandis que les organes de déplacement attelés aux moteurs 302 et 303 tournent librement. L'intérêt de cette configuration est d'avoir une vitesse plus importante du véhicule avec une seule roue motrice entraînée par le moteur 301.

La deuxième position des sélecteurs 350 et 350' est obtenue dans la deuxième position de la vanne 308, auquel cas la vanne 308' occupe également sa deuxième position. On obtient ainsi une circulation analogue à celle de la Figure 2, dans laquelle les moteurs 302 et 303 sont activés, les raccords 331A et 331B du moteur 301 étant raccordés en série sur, respectivement, les conduits de distribution 344 et 344' des deux demi-moteurs 302A et 303A, tandis que les autres connexions sont réalisées en parallèle.

La Figure 8 montre un sélecteur 450 selon un autre mode de réalisation, dont le tiroir est désigné par la référence 462. Ce tiroir comporte une unique gorge de sélection 481 qui, dans la première position représentée sur la partie supérieure de la Figure 8, met en communication les quatre gorges 54, 56, 58 et 60 de l'alésage 52. Dans cette position, la situation est analogue à celle qui se produit dans la première position du tiroir 362 de la Figure 6, le moteur étant inactivé puisque tous ses conduits de connexion sont raccordés entre eux.

Dans la deuxième position du tiroir 462, représentée sur la moitié inférieure de la Figure, la gorge de sélection 481 met en communication les gorges 54, 56 et 58 de l'alésage, tandis que l'une des gorges de communication (la gorge 60) est isolée. Dans cette situation, les premier et troisième conduits de connexion 83 et 84 du moteur communiquent tandis que le deuxième conduit de connexion 85 est isolé. La deuxième position du tiroir 462 conduit donc à une situation analogue à celle qui se produit lorsque le tiroir 62 de la Figure 1 occupe sa deuxième position. Dans ce mode de réalisation, le tiroir comportant une unique gorge de sélection, la gorge de communication isolée dans la deuxième position du tiroir se trouve vers une extrémité de l'alésage (dans l'exemple représenté, c'est le cas des deux gorges 54 et 60).

Deux moteurs équipés du sélecteur 450 peuvent être placés dans un circuit de commande analogue à celui de la Figure 7, dans lequel ils prennent respectivement la place des moteurs 302 et 303. Dans la première position du tiroir 462, la circulation du fluide est la même que sur la Figure 7, les deux moteurs équipés du sélecteur 450 étant inactivés.

En revanche, dans la deuxième position du tiroir 462, la circulation du fluide est la même que sur la Figure 3, seuls les premiers demi-moteurs des moteurs équipés du sélecteur 450 étant inactivés, tandis que les deuxièmes demi-moteurs sont activés et raccordés en parallèle sur le moteur 301.

Le conduit supplémentaire 476 du moteur de la Figure 8 peut être réalisé de la même manière que le conduit 376 de la Figure 6 et raccorder en permanence les gorges 56 et 58. Ceci n'est toutefois pas nécessaire et ce conduit peut être remplacé par un conduit supplémentaire analogue au conduit 76 de la Figure 4 pour être raccordé seulement à la première gorge de dérivation. En effet, la gorge de sélection 481 a une longueur sensiblement égale à l'espacement maximal entre les deux conduits extrêmes de l'alésage, de sorte que les deux conduits de dérivation 56 et 58 sont, quelle que soit la position du tiroir 462, mis en communication.

La Figure 9 montre un autre mode de réalisation, le sélecteur 550 étant équipé du tiroir 562 qui présente une gorge de sélection unique 581. Sur cette Figure, on n'a pas indiqué la présence du conduit supplémentaire qui peut être analogue au conduit 476 de la Figure 8 ou au conduit 76 de la Figure 4.

Dans la première position du tiroir 562, la gorge de communication 54 est isolée, tandis que les deux gorges de dérivation 56 et 58 et la deuxième gorge de communication 60 sont mises en communication par la gorge de sélection 581. En revanche, dans la deuxième position du tiroir 562, c'est cette fois la deuxième gorge de communication 60 qui est isolée, tandis que la première gorge de communication 54 est reliée aux gorges de dérivation 56 et 58 elles-mêmes reliées entre elles.

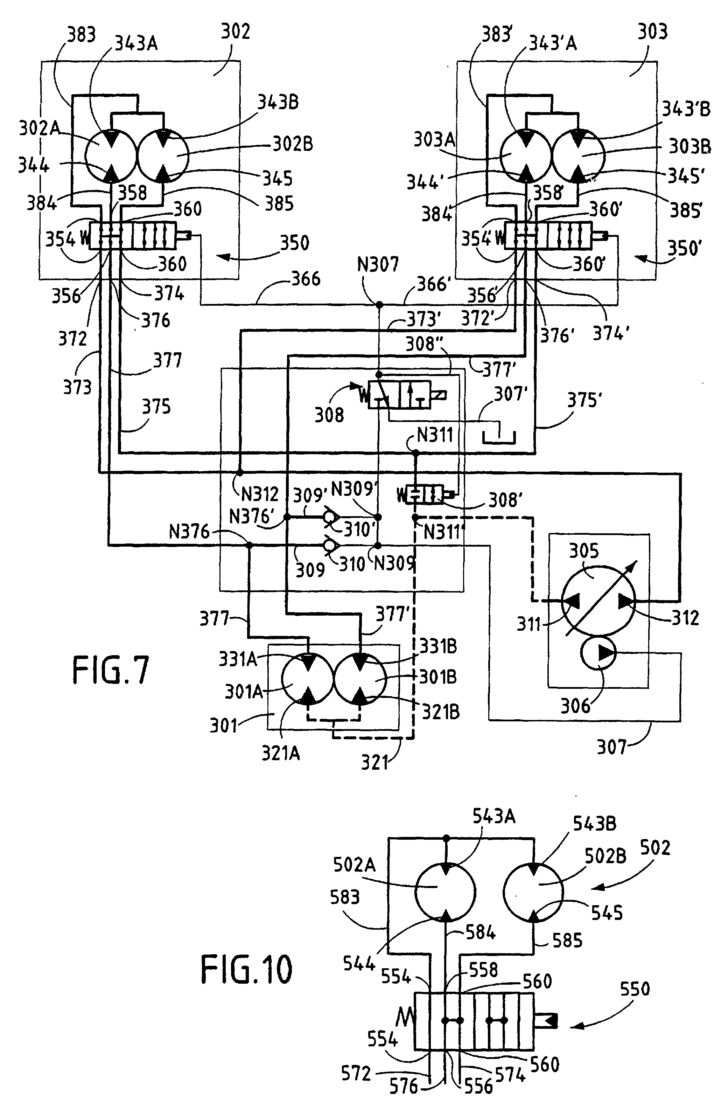

Sur la Figure 10, on a représenté schématiquement les connexions des deux demi-moteurs 502A et 502B d'un moteur 502 équipé du sélecteur 550. On voit que dans la première position du tiroir de ce sélecteur, les conduits de distribution 543A et 543B de ces demi-moteurs sont tous deux reliés au premier conduit principal 572 par le premier conduit de connexion 583 et la première gorge de communication 554. De leur côté, les conduits de distribution 544 et 545 des demi-moteurs 502A et 502B sont reliés au deuxième conduit principal 574 et au conduit supplémentaire 576, ces conduits étant mis en communication du fait de la position du tiroir qui fait communiquer les gorges 556, 558 et 560, de sorte que les deuxième et troisième conduits de connexion 585 et 584 communiquent entre eux et avec les conduits 576 et 574. Dans cette position, les deux demi-moteurs du moteur 502 sont activés et ces moteurs fonctionnent à pleine cylindrée. En revanche, dans la deuxième position du tiroir 562, seul le demi-moteur 502B est activé, les conduits de distribution 543A et 544 du demi-moteur 502A étant, avec les conduits de distribution 543B du demi-moteur 502B, raccordés au premier conduit principal 572 et au conduit supplémentaire 576 qui communiquent entre eux. Deux moteurs analogues au moteur 502 peuvent être utilisés dans un circuit de commande analogue à celui de la Figure 3, en prenant respectivement la place du moteur 102 et celle du moteur 103. Dans la deuxième position du sélecteur 550, la circulation est la même que sur la Figure 3. En revanche, dans la première position, les deux cylindrées des demi-moteurs analogues au moteur 502 seront activées, tandis que le moteur analogue au moteur 101 équipant le même circuit sera inactivé puisque tous ses raccords seront finalement reliés aux conduits 572 et 576, eux-mêmes raccordés au même raccord de sortie de la pompe.

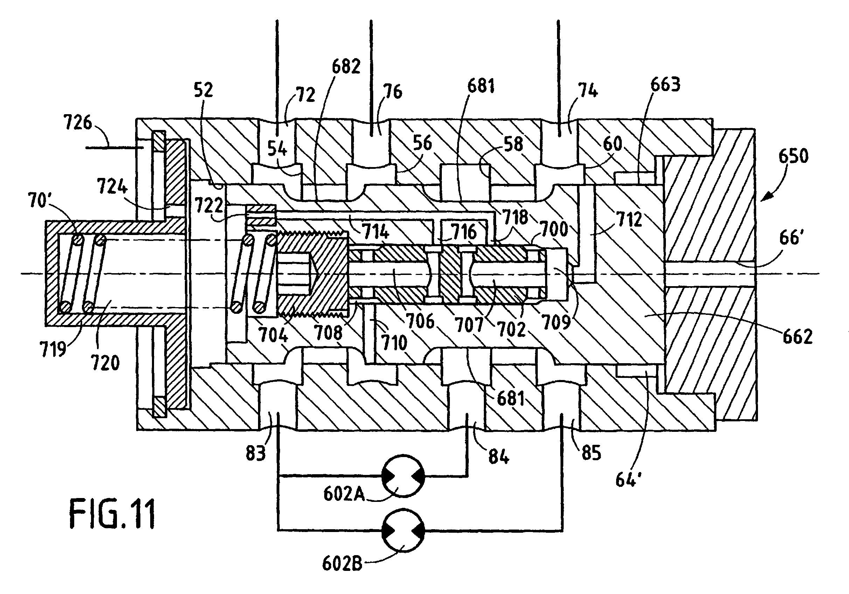

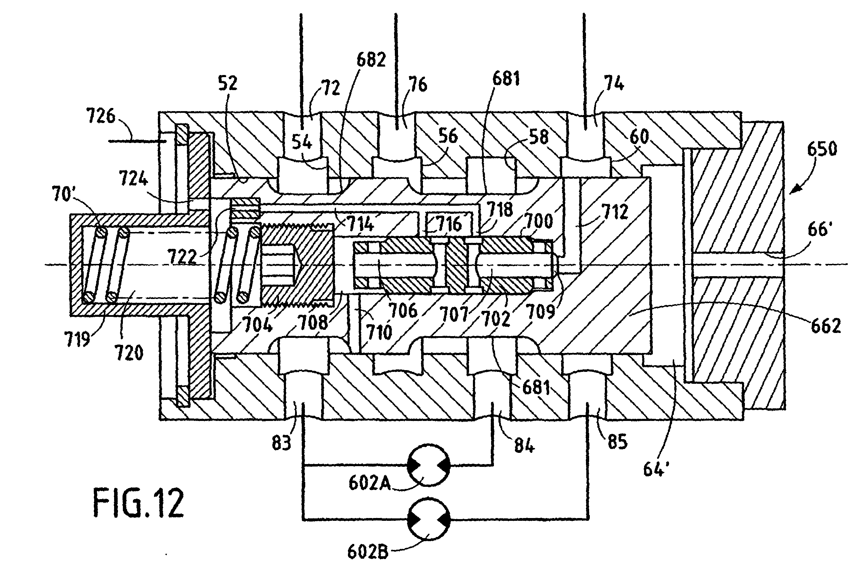

Les figures 11 et 12 montrent une configuration des gorges de sélection 681 et 682 du tiroir 662 du sélecteur 650 analogue à celle des gorges 281 et 282 de la figure 4. La chambre de pilotage 64' est susceptible d'être alimentée en fluide par le conduit externe 66' à l'encontre du ressort de rappel 70' (situé à l'opposé de la chambre 64'), pour commander le tiroir 662 entre ses deux positions extrêmes respectivement représentées sur la figure 11 (chambre 64' non alimentée) et sur la figure 12 (chambre 64' alimentée).

Le sélecteur 650 équipe un moteur à deux cylindrées distinctes de fonctionnement, schématisées par les deux demi-moteurs 602A et 602B.

Ce moteur peut être utilisé dans le circuit de la figure 5, comme les moteurs 202 et 203, la première position du sélecteur 650 (figure 11) et sa deuxième position (figure 12) correspondant respectivement aux première et deuxième positions du sélecteur 250 de la figure 4.

Toutefois, dans le mode de réalisation des figures 11 et 12, le tiroir 662 présente lui-même un alésage 700, qui est obturé par un bouchon 704 (sur lequel s'appuie le ressort 70') et qui forme un logement dans lequel est monté coulissant un clapet-navette 702. Ce dernier comporte deux enceintes distinctes 706 et 707 et délimite dans l'alésage 700 deux chambres d'extrémité 708 et 709 communiquant respectivement avec les enceintes 706 et 707. Un conduit 710 du tiroir 662 relie la deuxième gorge de sélection 682 et la chambre 708, tandis qu'un conduit 712 s'étend entre la chambre 709 et la face cylindrique 663 du tiroir. Ainsi, dans les deux positions de ce tiroir 662, les enceintes 706 et 707 sont respectivement reliées au premier conduit principal 72 et au deuxième conduit principal 74.

Ainsi, les moyens de commande du clapet-navette (702) entre ses deux positions comprennent une première chambre de commande (chambre 708) qui est reliée au premier conduit principal de puissance 72 par un premier conduit de commande (conduit 710) et une deuxième chambre de commande (chambre 709) qui est reliée au deuxième conduit principal de puissance 74 par un deuxième conduit de commande (conduit 712).

Un conduit de prélèvement 714 présente deux branches distinctes 716 et 718 qui débouchent dans l'alésage 700. Selon la position du clapet-navette 702, la branche 716 est mise en communication avec l'enceinte 706, ou la branche 718 est mise en communication avec l'enceinte 707. Une restriction calibrée 722 est placée sur le conduit 714 et, à son extrémité éloignée des branches 716 et 718, ce conduit débouche dans une chambre 720 qui communique avec l'enceinte du carter du moteur par un ou des orifices de communication 724.

En effet, l'alésage 52 est fermé, à l'opposé de la chambre de pilotage 64' du tiroir 662 par un bouchon 719 qui supporte le ressort 70' et qui présente le ou les orifices 724 ; la chambre 720 est ménagée entre la face interne de ce bouchon et le tiroir 662.

Sur la figure 11, c'est le conduit 74 qui est relié à la haute pression d'alimentation, de sorte que la chambre 709 est emplie de fluide, tandis que la chambre 708 présente son volume minimal, le conduit 72 servant à l'échappement de fluide. On voit que dans cette première position du clapet-navette, le conduit de prélèvement 714 est relié à la basse pression du conduit 72 par le conduit 710, l'enceinte 706 et la branche 716.

En revanche, sur la figure 12, Les conduits 72 et 74 sont respectivement reliés à la haute pression d'alimentation et à l'échappement. C'est donc la chambre 708 qui est emplie de fluide et le clapet-navette occupe sa deuxième position dans laquelle le conduit de prélèvement 714 est relié à la basse pression du conduit 74 par le conduit 712, l'enceinte 709 et la branche 718. La branche 716 est quant à elle obturée par la face cylindrique du clapet-navette.

On comprend que le clapet-navette 702 est agencé de manière à mettre le conduit de prélèvement 714 en communication avec celui des conduits principaux 72 et 74 qui joue le rôle de conduit d'échappement de fluide. Dans le mode de réalisation des figures 11 et 12, ceci est valable que le tiroir 662 occupe sa première ou sa deuxième position. Ainsi, sur la figure 11, le conduit 66' n'alimente pas la chambre 64' et le tiroir 662 occupe sa première position. Si, dans cette position, on inversait le sens de rotation du moteur en faisant respectivement jouer aux conduits 72 et 74 le rôle du conduit d'alimentation et celui du conduit d'échappement, la haute pression du conduit 72 remplirait la chambre 708, de sorte que la position du clapet-navette par rapport au tiroir 662 serait la même que sur la figure 12.

A l'inverse, la figure 12 montre le tiroir 662 dans sa deuxième position, la chambre 64' étant remplie de fluide. Si, dans cette position du tiroir, on inversait l'alimentation et l'échappement, le clapet-navette 702 se placerait, par rapport au tiroir 662, dans la position de la figure 11.

Le clapet-navette permet de prélever du fluide sur la basse presion (donc sans affecter le fonctionnement du moteur) par un conduit 726 prenant dans le carter, par exemple pour réfrigérer ce fluide avant de le ré-injecter dans le circuit fermé d'alimentation du moteur.

Les figures 11 et 12 montrent le clapet-navette équipant un sélecteur du type de celui que montre la figure 4. On pourrait également utiliser un tel clapet-navette dans des sélecteurs du type de ceux que montrent les figures 6, 8 et 9. En particulier, on pourrait remplacer le tiroir 362 de la figure 6 par le tiroir 662. Comme on l'a indiqué en référence à la figure 6, le moteur serait inactivé lorsque ce tiroir occuperait sa première position. Dans ce cas, les conduits 72, 74 et 76 seraient à la même pression et mettraient les conduits de commande du clapet-navette à la même pression, de sorte que ce dernier ne serait commandé positivement vers sa première position, ni vers sa deuxième position, ce qui ne serait aucunement gênant, puisque le moteur serait inactivé. En tout état de cause, même dans cette situation, le conduit de prélèvement est relié à celui des deux conduits 72 et 74 qui est à la plus basse pression, puisque ces deux conduits sont à la même pression. En revanche, lorsque le tiroir occuperait sa deuxième position, la situation serait la même que sur la figure 12.

Pour adapter le clapet-navette au tiroir 462 de la figure 8, il suffirait de faire déboucher le premier conduit de commande 710 dans la gorge de sélection 481 et le deuxième conduit de commande sur la face cylindrique du tiroir, de telle sorte qu'il soit relié à la gorge 60 et au conduit 85 et isolé des gorges 54, 56 et 58 dans la deuxième position du tiroir.

Enfin, pour adapter le clapet-navette au tiroir 562 de la figure 9, il suffirait de faire déboucher le premier conduit de commande 710 dans la face cylindrique du tiroir de telle sorte qu'il soit relié à la gorge 54 et au conduit 83 tout en étant isolé des gorges 56, 58 et 60 dans la première position du tiroir et qu'il reste relié à la gorge 54 et au conduit 83 dans la deuxième position du tiroir, tandis que le deuxième conduit de commande 712 déboucherait dans la face cylindrique du tiroir de telle sorte qu'il soit relié à la gorge 60 et au conduit 85 tout en étant isolé des gorges 54, 56 et 58 dans la deuxième position du tiroir et qu'il reste relié à la gorge 60 et au conduit 85 dans la première position du tiroir.

## Revendications

1. Moteur à fluide sous pression comprenant :
- un carter (1, 2, 3) qui comporte deux conduits principaux de puissance (72, 74), respectivement d'alimentation de fluide et d'échappement de fluide ;
- un bloc-cylindres (10) qui comporte une pluralité de cylindres (20) équipés, chacun, d'un piston (22), ces cylindres étant disposés radialement par rapport à un axe (18) et étant susceptibles d'être alimentés en fluide sous pression ;
- un organe de réaction (24) apte à coopérer avec les pistons, cet organe de réaction et le bloc-cylindres (10) étant susceptibles de tourner l'un par rapport à l'autre autour de l'axe (18);
- un distributeur interne de fluide (28), solidaire de l'organe de réaction (24) vis-à-vis de la rotation autour de l'axe de rotation (18) et présentant des conduits de distribution susceptibles de communiquer avec les cylindres (20), ces conduits de distribution étant répartis en trois groupes de conduits de distribution (43, 44, 45) ; et
- un sélecteur (50, 150, 250, 350, 450, 550) comprenant un alésage (52) et un tiroir (62, 262, 362, 462, 562), l'alésage ayant une face sensiblement cylindrique (53) qui présente au moins trois gorges (54, 56, 60), les deux conduits principaux (72, 74) et trois conduits de connexion (83, 84, 85) qui sont respectivement reliés à chacun des trois groupes de conduits de distribution (43, 44, 45) étant raccordés à cet alésage, le tiroir étant monté dans l'alésage et présentant au moins une première gorge de sélection (82) ménagée sur sa périphérie externe, ce tiroir étant susceptible d'être déplacé entre deux positions dans lesquelles ladite gorge de sélection isole et/ou fait communiquer certaines gorges dudit alésage,
**caractérisé en ce qu'**il comporte un conduit supplémentaire de puissance (76, 176, 276, 376), d'alimentation ou d'échappement de fluide, **en ce que** l'alésage (52) du sélecteur (50, 150, 250, 350, 450, 550) présente quatre gorges annulaires (54, 56, 58, 60), réalisées dans ladite face sensiblement cylindrique (53) et espacées les unes des autres, ces gorges comprenant deux gorges dites "de communication" et deux gorges dites "de dérivation", un premier (72, 172, 272, 372) des deux conduits principaux et le premier conduit de connexion (83, 183, 283, 383) étant reliés en permanence à la première gorge de communication (54), le deuxième (74, 174, 274, 374) des deux conduits principaux et le deuxième conduit de connexion (85, 185, 285, 385) étant reliés en permanence à la deuxième gorge de communication (60), le conduit supplémentaire (76, 176, 276, 376) étant relié en permanence à la première gorge de dérivation (56), et le troisième conduit de connexion (84, 184, 284, 384) étant relié en permanence à la deuxième gorge de dérivation (58),
et **en ce que** la première gorge (82, 281, 381, 481, 581) de sélection du tiroir (62, 262, 362, 462, 562) est susceptible de mettre en communication les deux gorges de dérivation (56, 58) de l'alésage (52).

2. Moteur selon la revendication 1, **caractérisé en ce que**, les gorges (54, 56, 58, 60) de l'alésage (52) du sélecteur (50, 150, 250, 350, 450, 550) étant numérotées de 1 à 4 lorsque l'on les considère les unes après les autres d'une première à une deuxième extrémité de la face sensiblement cylindrique (53) de cet alésage, la première et la quatrième gorges (54, 60) sont des gorges de communication, tandis que la deuxième et la troisième gorges (56, 58) sont des gorges de dérivation.

3. Moteur selon la revendication 1 ou 2, **caractérisé en ce que** les gorges de dérivation (56, 58) sont des gorges borgnes, seul le conduit supplémentaire (76) étant relié en permanence à la première gorge de dérivation (56), tandis que seul le troisième conduit de connexion (84) est relié en permanence à la deuxième gorge de dérivation (58).

4. Moteur selon l'une quelconque des revendications 1 à 3, **caractérisé en ce que** le tiroir présente une unique gorge de sélection (82), apte à faire communiquer les deux gorges de dérivation (56, 58) tout en les isolant des gorges de communication (54, 60) lorsque le tiroir (62) occupe sa première position et apte à faire communiquer les deux gorges de dérivation (56, 58) et l'une (54) des gorges de communication tout en isolant l'autre gorge de communication (60) lorsque le tiroir occupe sa deuxième position.

5. Moteur selon la revendication 2 ou 3, **caractérisé en ce que** le tiroir présente une première et une deuxième gorges de sélection (281, 282) réalisées de telle sorte que :
- dans la première position du tiroir (262), la première gorgé de communication (54) et la première gorge de dérivation (56) sont mises en communication par la deuxième gorge de sélection (282) et sont isolées de la deuxième gorge de dérivation (58) et de la deuxième gorge de communication (60), tandis que la deuxième gorge de dérivation (58) et la deuxième gorge de communication (60) sont mises en communication par la première gorge de sélection (281) et sont isolées de la première gorge de dérivation (54) et de la première gorge de communication (56), et que
- dans la deuxième position du tiroir, la première gorge de communication (54) est isolée des autres gorges de l'alésage (56, 58, 60), les première et deuxième gorges de dérivation (56, 58) sont mises en communication par la première gorge de sélection (281) et la deuxième gorge de communication (60) est isolée des autres gorges de l'alésage.

6. Moteur selon la revendication 5, **caractérisé en ce que**, dans la deuxième position du tiroir (262), la deuxième gorge de sélection (282) se trouve en regard de l'une (54) des gorges de communication (54, 60).

7. Moteur selon l'une quelconque des revendications 5 et 6, **caractérisé en ce qu'**il comporte un dispositif (376, 476) de mise en communication permanente de la première et de la deuxième gorge de dérivation (56, 58).

8. Moteur selon la revendication 2 ou 3, **caractérisé en ce que** le tiroir présente une unique gorge de sélection (581), apte à faire communiquer les deux gorges de dérivation (56, 58) et la deuxième gorge de communication (60) tout en les isolant de la première gorge de communication (54) lorsque le tiroir (562) occupe sa première position et apte à faire communiquer la première gorge de communication (54) et les deux gorges de dérivation (56, 58) tout en les isolant de la deuxième gorge de communication (60) lorsque le tiroir (562) occupe sa deuxième position.

9. Moteur selon l'une quelconque des revendications 1 à 3, **caractérisé en ce que** le tiroir (462) présente une unique gorge de sélection (481), apte à faire communiquer les quatre gorges (54, 56, 58, 60) de l'alésage lorsque le tiroir occupe sa première position et apte à isoler l'une des gorges de communication (60) qui est située vers une extrémité de l'alésage tout en faisant communiquer les autres gorges (54, 56, 58) de l'alésage lorsque le tiroir occupe sa deuxième position.

10. Moteur selon l'une quelconque des revendications 1 à 9, **caractérisé en ce que** le tiroir (662) du sélecteur (650) présente un logement (700) dans lequel est disposé un clapet-navette (702) mobile entre deux positions à l'intérieur dudit logement et sollicité entre ces deux positions par des moyens de commande, **en ce que** le sélecteur (650) comporte un conduit de prélèvement (714, 716, 718) relié à une évacuation de fluide (720, 724, 726) et **en ce que** dans chacune de ses deux positions, le clapet-navette (702) est susceptible de mettre en communication ledit conduit de prélèvement avec celui des conduits principaux de puissance (72, 74) qui est mis à la plus basse pression.

11. Moteur selon la revendication 10, **caractérisé en ce que** les moyens de commande de la position du clapet-navette (702) comprennent une première chambre de commande (708) reliée au premier conduit principal de puissance (72) par un premier conduit de commande (710) et une deuxième chambre de commande (709) reliée au deuxième conduit principal de puissance (74) par un deuxième conduit de commande (712).

## Claims

1. A pressurized fluid motor comprising:
- a casing (1, 2, 3) which includes two main power ducts (72, 74), respectively a fluid feed duct and a fluid exhaust duct;
- a cylinder block (10) which includes a plurality of cylinders (20) each equipped with a piston (22), said cylinders being disposed radially relative to an axis (18) and adapted to be fed with pressurized fluid;
- a reaction member (24) adapted to cooperate with the pistons, said reaction member and the cylinder block (10) being able to rotate relative to each other about the axis (18);
- an internal fluid distributor (28) rotating with the reaction member (24) about the rotation axis (18) and having distribution ducts adapted to communicate with the cylinders (20), said distribution ducts being divided into three groups of distribution ducts (43, 44, 45); and
- a selector (50, 150, 250, 350, 450, 550) comprising a bore (52) and a slide (62, 262, 362, 462, 562), the bore having a substantially cylindrical face (53) with at least three grooves (54, 56, 60), the two main ducts (72, 74) and three connection ducts (83, 84, 85) which are respectively connected to each of the three groups of distribution ducts (43, 44, 45) being connected to said bore, the slide being mounted in the bore and having at least a first selection groove (82) on its outside periphery, said slide being adapted to be moved between two positions in which said selection groove isolates and/or establishes communication between certain grooves of said bore,
the motor being **characterized in that** it includes an additional power duct (76, 176, 276, 376) constituting a fluid feed duct or a fluid exhaust duct, **in that** the bore (52) of the selector (50, 150, 250, 350, 450, 550) has four annular grooves (54, 56, 58, 60) on said substantially cylindrical face (53) and spaced from each other, said grooves comprising two "communication" grooves and two "branch" grooves, a first (72, 172, 272, 372) of the two main ducts and the first connection duct (83, 183, 283, 383) being permanently connected to the first communication groove (54), the second (74, 174, 274, 374) of the two main ducts and the second connection duct (85, 185, 285, 385) being permanently connected to the second communication groove (60), the additional duct (76, 176, 276, 376) being permanently connected to the first branch groove (56) and the third connection duct (84, 184, 284, 384) being permanently connected to the second branch groove (58),
and **in that** the first selection groove (81, 281, 381, 481, 581) of the slide (62, 262, 362, 462, 562) is adapted to establish communication between the two branch grooves (56, 58) of the bore (52).

2. A motor according to claim 1, **characterized in that**, the grooves (54, 56, 58, 60) of the bore (52) of the selector (50, 150, 250, 350, 450, 550) being numbered from 1 through 4 when considered in turn from a first to a second end of the substantially cylindrical face (53) of the bore, the first and fourth grooves (54, 60) are communication grooves and the second and third grooves (56, 58) are branch grooves.

3. A motor according to claim 1 or claim 2, **characterized in that** the branch grooves (56, 58) are blind grooves, only the additional duct (76) is permanently connected to the first branch groove (56) and only the third connection duct (84) is permanently connected to the second branch groove (58).

4. A motor according to any one of claims 1 to 3, **characterized in that** the slide has a single selection groove (82) adapted to establish communication between the two branch grooves (56, 58) and to isolate them from the communication grooves (54, 60) when the slide (62) occupies its first position and adapted to establish communication between the two branch grooves (56, 58) and one (54) of the communication grooves but to isolate the other communication groove (60) when the slide occupies its second position.

5. A motor according to claim 2 or claim 3, **characterized in that** the slide has first and second selection grooves (281, 282) such that:
- in the first position of the slide (262) the first communication groove (54) and the first branch groove (56) communicate via the second selection groove (282) and are isolated from the second branch groove (58) and from the second communication groove (60) whereas the second branch groove (58) and the second communication groove (60) communicate via the first selection groove (281) and are isolated from the first branch groove (54) and from the first communication groove (56), and
- in the second position of the slide the first communication groove (54) is isolated from the other grooves of the bore (56, 58, 60), the first and second branch grooves (56, 58) communicate via the first selection groove (281) and the second communication groove (60) is isolated from the other grooves of the bore.

6. A motor according to claim 5, **characterized in that**, in the second position of the slide (262), the second selection groove (282) faces one (54) of the communication grooves (54, 60).

7. A motor according to claim 5 or claim 6, **characterized in that** it includes a device (376, 476) for establishing permanent communication between the first and second branch grooves (56, 58).

8. A motor according to claim 2 or claim 3, **characterized in that** the slide has a single selection groove (581) adapted to establish communication between the two branch grooves (56, 58) and the second communication groove (60) and to isolate them from the first communication groove (54) when the slide (562) occupies its first position and adapted to establish communication between the first communication groove (54) and the two branch grooves (56, 58) and to isolate them from the second communication groove (60) when the slide (562) occupies its second position.

9. A motor according to any one of claims 1 to 3, **characterized in that** the slide (462) has a single selection groove (481) adapted to establish communication between the four grooves (54, 56, 58, 60) of the bore when the slide occupies its first position and adapted to isolate one of the communication grooves (60) that is towards one end of the bore whilst establishing communication between the other grooves (54, 56, 58) of the bore when the slide occupies its second position.

10. A motor according to any one of claims 1 to 9, **characterized in that** the slide (662) of the selector (650) has a housing (700) in which there is disposed a shuttle valve (702) mobile between two positions inside said housing and moved between said two positions by control means, **in that** the selector (650) includes a sampling duct (714, 716, 718) connected to a fluid exhaust (720, 724, 726) and **in that** in each of its two positions the shuttle valve (702) is adapted to establish communication between said sampling duct and whichever of the main power ducts (72, 74) is at the lower pressure.

11. A motor according to claim 10, **characterized in that** the means controlling the position of the shuttle valve (702) comprise a first control chamber (708) connected to the first main power duct (72) by a first control duct (710) and a second control chamber (709) connected to the second main power duct (74) by a second control duct (712).

## Patentansprüche

1. Druckfluidmotor mit
- einem Gehäuse (1, 2, 3), das zwei Hauptarbeitsleitungen (72, 74) zum Zulauf bzw. Ablauf von Fluid umfasst;
- einem Zylinderblock (10), der mehrere Zylinder (20) umfasst, die jeweils mit einem Kolben (22) versehen sind, wobei die Zylinder bezüglich einer Achse (18) radial angeordnet sind und mit Druckfluid speisbar sind;
- einem Reaktionsorgan (24), das mit den Kolben zusammenzuwirken vermag, wobei das Reaktionsorgan und der Zylinderblock (10) sich bezüglich einander um die Achse (18) zu drehen vermögen;
- einem internen Fluidverteiler (28), der mit dem Reaktionsorgan (24) bezüglich der Drehung um die Rotationsachse (18) fest verbunden ist und Verteilerleitungen aufweist, die mit den Zylindern (20) zu kommunizieren vermögen, wobei die Verteilerleitungen in drei Verteilerleitungsgruppen (43, 44, 45) aufgeteilt sind; und
- einem Schaltventil (50, 150, 250, 350, 450, 550) mit einer Bohrung (52) und einem Schieber (62, 262, 362, 462, 562), wobei die Bohrung eine im Wesentlichen zylindrische Fläche (53) hat, die wenigstens drei Nuten (54, 56, 60) aufweist, wobei die zwei Hauptleitungen (72, 74) und die drei Verbindungsleitungen (83, 84, 85), die jeweils mit jeder der drei Verteilerleitungsgruppen (43, 44, 45) verbunden sind, an der Bohrung angeschlossen sind, wobei der Schieber in der Bohrung angebracht ist und wenigstens eine erste, an seinem Außenrand angeordnete Schaltventil-Schiebernut (82) aufweist, wobei der Schieber zwischen zwei Positionen verstellbar ist, in denen die Schaltventil-Schiebernut bestimmte Nuten der Bohrung voneinander trennt und/oder miteinander verbindet,
**dadurch gekennzeichnet, dass** er eine Zusatzarbeitsleitung (76, 176, 276, 376) zum Zulauf bzw. Ablauf der Flüssigkeit umfasst, dass die Bohrung (52) des Schaltventils (50, 250, 350, 450, 550) vier Ringnuten (54, 56, 58, 60) aufweist, die in der im Wesentlichen zylindrischen Fläche (53) ausgeführt und voneinander beabstandet sind, wobei die Nuten zwei so genannte "Verbindungsnuten" und zwei so genannte "Bypass-Nuten" aufweisen, wobei eine erste (72, 172, 272, 372) der zwei Hauptleitungen und die erste Verbindungsleitung (83, 183, 283, 383) ständig mit der ersten Verbindungsnut (54) verbunden sind, wobei die zweite (74, 174, 274, 374) der zwei Hauptleitungen und die zweite Verbindungsleitung (85, 185, 285, 385) ständig mit der zweiten Verbindungsnut (60) verbunden sind, wobei die Zusatzleitung (76, 176, 276, 376) ständig mit der ersten Bypass-Nut (56) verbunden ist, und wobei die dritte Verbindungsleitung (84, 184, 284, 384) ständig mit der zweiten Bypass-Nut (58) verbunden ist,
und dass die erste Schaltventil-Schiebernut (82, 281, 381, 481, 581) des Schiebers (62, 262, 362, 462, 562) die zwei Bypass-Nuten (56, 58) der Bohrung (52) miteinander zu verbinden vermag.

2. Motor nach Anspruch 1,
**dadurch gekennzeichnet, dass** bei einer nacheinander von einem ersten zu einem zweiten Ende der im Wesentlichen zylindrischen Fläche (53) der Bohrung betrachteten Durchnummerierung der Nuten (54, 56, 58, 60) der Bohrung (52) des Schaltventils (50, 150, 250, 350, 450, 550) von 1 bis 4 die erste und die vierte Nut (54, 60) Verbindungsnuten sind, während die zweite und die dritte Nut (56, 58) Bypass-Nuten sind.

3. Motor nach Anspruch 1 oder 2,
**dadurch gekennzeichnet, dass** die Bypass-Nuten (56, 58) Sacknuten sind, wobei nur die Zusatzleitung (76) ständig mit der ersten Bypass-Nut (56) verbunden ist, wogegen nur die dritte Verbindungsleitung (84) ständig mit der zweiten Bypass-Nut (58) verbunden ist.

4. Motor nach einem der Ansprüche 1 bis 3,
**dadurch gekennzeichnet, dass** der Schieber eine einzige Schaltventil-Schiebernut (82) aufweist, die die zwei Bypass-Nuten (56, 58) miteinander zu verbinden vermag und diese hierbei von den Verbindungsnuten (56, 60) trennt, wenn sich der Schieber (62) in seiner ersten Position befindet, und die die zwei Bypass-Nuten (56, 58) und eine (54) der Verbindungsnuten miteinander zu verbinden vermag und hierbei die andere Verbindungsnut (60) von diesen trennt, wenn sich der Schieber in seiner zweiten Position befindet.

5. Motor nach Anspruch 2 oder 3,
**dadurch gekennzeichnet, dass** der Schieber eine erste und eine zweite Schaltventil-Schiebemut (281, 282) aufweist, die derart ausgeführt sind, dass:
- in der ersten Position des Schiebers (262) die erste Verbindungsnut (54) und die erste Bypass-Nut (56) durch die zweite Schaltventil-Schiebernut (282) miteinander verbunden sind und von der zweiten Bypass-Nut (58) und der zweiten Verbindungsnut (60) getrennt sind, wogegen die zweite Bypass-Nut (58) und die zweite Verbindungsnut (60) durch die erste Schaltventil-Schiebemut (281) miteinander verbunden sind, und von der ersten Bypass-Nut (54) und der ersten Verbindungsnut (56) getrennt sind, und dass
- in der zweiten Position des Schiebers die erste Verbindungsnut (54) von den anderen Bohrungsnuten (56, 58, 60) getrennt ist, die erste und die zweite Bypass-Nut (56, 58) durch die erste Schaltventil-Schiebernut (281) miteinander verbunden sind, und die zweite Verbindungsnut (60) von den anderen Bohrungsnuten getrennt ist.

6. Motor nach Anspruch 5,
**dadurch gekennzeichnet, dass** in der zweiten Position des Schiebers (262) die zweite Schaltventil-Schiebernut (282) gegenüber einer der Verbindungsnuten (54, 60) angeordnet ist.

7. Motor nach einem der Ansprüche 5 oder 6,
**dadurch gekennzeichnet, dass** er eine Vorrichtung (376, 476) zum ständigen Verbinden der ersten und der zweiten Bypass-Nut (56, 58) aufweist.

8. Motor nach Anspruch 2 oder 3,
**dadurch gekennzeichnet, dass** der Schieber eine einzige Schaltventil-Schiebernut (581) aufweist, die die zwei Bypass-Nuten (56, 58) und die zweite Verbindungsnut (60) miteinander zu verbinden vermag und sie hierbei von der ersten Verbindungsnut (54) trennt, wenn sich der Schieber (562) in seiner ersten Position befindet, und die die erste Verbindungsnut (54) und die zwei Bypass-Nuten (56, 58) miteinander zu verbinden vermag und sie hierbei von der zweiten Verbindungsnut (60) trennt, wenn sich der Schieber (562) in seiner zweiten Position befindet.

9. Motor nach einem der Ansprüche 1 bis 3,
**dadurch gekennzeichnet, dass** der Schieber (462) eine einzige Schaltventil-Schiebemut (481) aufweist, die die vier Nuten (54, 56, 58, 60) der Bohrung zu verbinden vermag, wenn sich der Schieber in seiner ersten Position befindet, und die eine der Verbindungsnuten (60) abzusperren vermag, die in Richtung zu einem Ende der Bohrung angeordnet ist, und hierbei die anderen Nuten (54, 56, 58) der Bohrung miteinander verbindet, wenn sich der Schieber in seiner zweiten Position befindet.

10. Motor nach einem der Ansprüche 1 bis 9,
**dadurch gekennzeichnet, dass** der Schieber (662) des Schaltventils (650) eine Aufnahme (700) aufweist, in der ein Wechselventil (702) angeordnet ist, das innen in der Aufnahme zwischen zwei Positionen beweglich ist und durch Steuermittel zwischen diesen beiden Positionen beansprucht wird, dass das Schaltventil (650) eine Entnahmeleitung (714, 716, 718) aufweist, die mit einem Flüssigkeitsablauf (720, 724, 726) verbunden ist, und dass in jeder dieser zwei Positionen das Wechselventil (702) die Entnahmeleitung mit der Hauptarbeitsleitung (72, 74) zu verbinden vermag, die sich auf niedrigstem Druck befindet.

11. Motor nach Anspruch 10,
**dadurch gekennzeichnet, dass** die Mittel zum Steuern der Position des Wechselventils (702) eine erste Steuerkammer (708) aufweisen, die mit der ersten Hauptarbeitsleitung (72) durch eine erste Steuerleitung (710) verbunden ist, sowie eine zweite Steuerkammer (709), die mit der zweiten Hauptarbeitsleitung (74) durch eine zweite Steuerleitung (712) verbunden ist.
